# EUROPEAN PATENT SPECIFICATION

(11) **EP 3 035 754 B1**
(45) Date of publication and mention of the grant of the patent: **24.10.2018**
(21) Application number: 14307067.0
(22) Date of filing: 18.12.2014
(51) Int. Cl.: H04W 72/04

(54) **METHOD FOR ALLOCATION OF UPLINK RESOURCES FOR MACHINE TYPE COMMUNICATIONS ON RESOURCES ALREADY ALLOCATE TO ANOTHER DEVICE**
VERFAHREN ZUR DIE ZUWEISUNG VON UPLINK-RESSOURCEN FÜR MASCHINENTYP KOMMUNIKATIONEN AUF AN EINEM ANDEREN MOBILGERÄT BEREITS ZUGEWIESENE RESSOURCEN
MÉTHODE POUR L'ALLOCATION DE RESSOURCES DE LIAISON MONTANTE POUR DES COMMUNICATIONS MTC, SUR DES RESSOURCES DÉJÀ ALLOUÉES À UN AUTRE APPAREIL CELLULAIRE

(43) Date of publication of application: 22.06.2016
(73) Proprietor: Alcatel Lucent, 91620 Nozay (FR)
(72) Inventor: Braun, Volker, 70435 Stuttgart (DE); Saur, Stephan, 70435 Stuttgart (DE)
(74) Representative: Kleinbub, Oliver

(56) References cited:
- US-A1- 2013 258 953
- US-A1- 2014 029 568
- US-A1- 2014 247 795
- US-A1- 2014 349 660
- ANTONIS G GOTSIS ET AL: "Evolution of packet scheduling for Machine-Type communications over LTE: Algorithmic design and performance analysis", 2012 IEEE GLOBECOM WORKSHOPS (GC WKSHPS 2012) : ANAHEIM, CALIFORNIA, USA, 3 - 7 DECEMBER 2012, IEEE, PISCATAWAY, NJ, 3 December 2012 (2012-12-03), pages 1620-1625, XP032341628, DOI: 10.1109/GLOCOMW.2012.6477828 ISBN: 978-1-4673-4942-0
- "3rd Generation Partnership Project; Technical Specification Group Services and System Aspects; Study on Machine-Type Communications (MTC) and other mobile data applications communications enhancements (Release 12)", 3GPP STANDARD; 3GPP TR 23.887, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.0.0, 20 December 2013 (2013-12-20), pages 1-151, XP050729146, [retrieved on 2013-12-20]

## Description

### Field of the invention

The invention relates to a method for sending data in uplink from a device to a base station, and a base station and a device adapted to perform said method.

### Background

Massive Machine Communication (MMC) techniques can be integrated into a wireless broadband system. The MMC devices are typically low-cost and their functionality may be reduced as compared to a conventional user equipment, as e.g. smart phones, tablets, etc..

Such a wireless broadband system in which MMC techniques can be integrated is e.g. a multicarrier system, as Orthogonal Frequency Division Multiplexing (OFDM), Universal Filtered Multi-carrier (UFMC), also known as UF-OFDM, Single Carrier Frequency Division Multiple Access (SC-FDMA), Filter Bank Multicarrier (FBMC), etc. with resource allocation in Transmission Time Intervals (TTI) and frequency resources, as e.g. subcarriers or resource blocks similar to Long Term Evolution (LTE).

US-patent application publication US2014/0349660 describes a system and method for resource scheduling in a mobile communication network supporting machine-to-machine (M2M) traffic and user equipment (UE) traffic. In particular, this patent application describes a system and method that differentiates between M2M-traffic and UE-traffic when scheduling radio resource units in a Long Term Evolution (LTE) network. Prior to allocation of resource units, the available resource units are divided into two disjoint sets, a UE-specific set (dedicated for UE users) and an M2M-specific set (dedicated for M2M-terminals). A hybrid scheduler now allocates resource units to M2M terminals from the M2M-specific set only. Any unallocated resource unit from the M2M-specific set and resource units assigned to the UE-specific set are then allocated to the UEs. To enable classification of M2M-traffic only, M2M-specific Quality of Service Class Indicators (QCI) are defined, which are disjoint from existing QCIs, which classify UE traffic only.

3GPP Technical Report 23.887 v.12.0.0 describes a Study on Machine-Type Communications (MTC) and other mobile data applications communications enhancements, including small data transmission, triggering enhancements, monitoring enhancements, UE power optimizations and group based features.

US 2014/0029568 A1 refers to a machine to machine (M2M) frame in frame. M2M signals are transmitted in an allocated narrow portion of bandwidth in a wideband structure. NB (narrow band) - M2M regions are scheduled where the M2M data may be transported. Subcarrier allocations may be applied in both DL (downlink) and UL (uplink). An NB-M2M preamble is transmitted as the first NB-M2M symbol in the allocated NB-M2M region.

### Summary

Massive Machine Communication (MMC) is expected to create a large amount of traffic volume in future wireless networks, in particular involving small payload packets.

An issue with small packets in current wireless broadband systems such as Long Term Evolution (LTE) is that the signaling overhead is large compared to the payload, thus making the transmission of small payload packets very inefficient.

Thus, the technical problem is to design efficient solutions for control and data transmission, primarily in the context of Massive Machine Communication (MMC) using a wireless broadband system. Also the power consumption of MMC devices shall be minimized by adequate design of the air interface.

A solution according to the state of the art uses strict time synchronization of uplink (UL) scheduling requests (SR) and data transmission by means of so-called closed loop procedures. A device is assigned periodic contention-free resources of a shared scheduling request channel. In LTE these SRs are carried on an UL control channel, the so-called Physical Uplink Control Channel (PUCCH). If the device has data to transmit, it waits for its SR window and transmits an SR, then receives user-specific UL scheduling grant in downlink (DL) and then transmits UL data.

An issue with this solution is that in the presence of a large number of devices sending sporadic UL data the required SR capacity is rather large, or alternatively a device has infrequent SR windows causing scheduling delay.

LTE also allows using the contention-based random access channel for scheduling request purposes. The random access channel is designed for initial access in the presence of UL timing mismatch. In the presence of a large number of scheduling requests this solution would therefore be inefficient and waste radio resources.

A basic idea is to apply an appropriate uplink resource allocation mechanism dependent on a service, as e.g. massive machine communication or broadband traffic, the uplink resources are used for, or dependent on a category of a device the uplink resources are used for, as e.g. a sensor for machine communication or a smartphone for broadband traffic. Furthermore, a resource allocation mechanism assigns uplink resources by using a mapping relation of the uplink resources to uplink scheduling request resources or uplink scheduling request indices in order to save radio resources.

The object of the invention is thus achieved by a method for allocation of uplink resources using at least two resource allocation mechanisms, wherein a resource allocation mechanism of said at least two resource allocation mechanisms is used dependent on at least one of a service and a category of a device the uplink resources are used for, and at least one of said at least two resource allocation mechanisms assigns uplink resources by using a mapping relation of the uplink resources to uplink scheduling request resources or uplink scheduling request indices, as captured in independent claim 1.

Further described is a base station suitable for allocation of uplink resources to devices using at least two resource allocation mechanisms, wherein said base station is operable to use a resource allocation mechanism of said at least two resource allocation mechanisms dependent on at least one of a service and a category of a device the uplink resources are used for, and at least one of said at least two resource allocation mechanisms assigns uplink resources by using a mapping relation of the uplink resources to uplink scheduling request resources or uplink scheduling request indices.

Further described is a device suitable for receiving allocations of uplink resources sent by at least one resource allocation mechanism, wherein said device is operable to receive and evaluate an allocation of uplink resources which is sent by a resource allocation mechanism of at least two resource allocation mechanisms which is used dependent on at least one of a service the uplink resources are used for and a category of the device, and at least one of said at least two resource allocation mechanisms assigns uplink resources by using a mapping relation of the uplink resources to uplink scheduling request resources or uplink scheduling request indices.

In an embodiment of the invention, said at least two resource allocation mechanisms use the same scheduling request mechanism, e.g. the SRs are conveyed contention-free on user-specific resources on the same uplink control channel.

In an embodiment of the invention, said at least two resource allocation mechanisms use different scheduling request mechanisms.

In an embodiment of the invention, said different scheduling request mechanisms use different scheduling request channels.

In an embodiment of the invention, said different scheduling request channels comprise at least one contention-based scheduling request channel and at least one contention-free scheduling request channel.

In an alternative embodiment of the invention, said different scheduling request channels comprise at least two contention-free scheduling request channels, and do not comprise a contention-based scheduling request channel.

In an embodiment of the invention, a device uses at least two resource allocation mechanisms for at least two services of the device the uplink resources are used for.

In the invention, a first device sends a scheduling request to a base station, the base station sends information for allocation of uplink resources to the first device, at least one further device overhears the information for allocation of uplink resources to the first device, the at least one further device detects whether uplink resources allocated by said information are also allocated to the further device, and the at least one further device reduces its uplink resources by uplink resources which are allocated both by said information and to the at least one further device.

In an embodiment of the invention, a device sends uplink data on allocated uplink resources, and a base station sends a data acknowledgement if the uplink data are correctly received.

In an embodiment of the invention, at least one of information for allocation of uplink resources and a data acknowledgement comprises an identifier which is related to a scheduling request.

In an embodiment of the invention, different scheduling request channels or different scheduling request indices are used to request uplink data payload resources, and information indicating a relation of scheduling request channels or scheduling request indices to uplink data payload resources is sent out in downlink. Uplink data payload resources may be disjoint, overlapping, or appropriate for different services.

In an embodiment of the invention, the acknowledgement is sent in a control channel message using an identifier related to a device specific signaling.

In an embodiment of the invention, an amount of uplink resources requested from the device and other devices by scheduling requests is greater than the amount of predefined uplink resources in a time period, and an index n of a scheduling request is allocated to an uplink resource m by a relation m = n modulo M, with M being the amount of uplink resources.

In an embodiment of the invention, a device sends out scheduling requests on a contention-based scheduling request channel only if a period of scheduling request opportunities of the device on a contention-free control channel is above a threshold.

In an embodiment of the invention, an index of a scheduling request used by a device is related to an identifier of the device.

In an embodiment of the invention, if there is a biunique mapping of identifiers of devices to indices of scheduling requests, the device is informed not to include the identifier of the device into the uplink data payload.

In an embodiment of the invention, the information for allocation of uplink resources to a device comprises an identifier of the device.

In an embodiment of the invention, the information for allocation of uplink resources is sent on pre-allocated radio resources.

In an embodiment of the invention, the at least one further device first scans a downlink control channel whether uplink resources are allocated to the at least one further device, and then detects whether uplink resources are allocated to another device only when uplink resources are allocated to the at least one further device.

In an embodiment of the invention, the uplink resources allocated to the first device are constrained within a defined resource space, and the at least one further device detects whether uplink resources are allocated to the first device only when uplink resources allocated to the at least one further device at least partially lie within said defined resource space.

In embodiments of the invention, the uplink resources allocated by said at least two resource allocation mechanisms at least partially overlap.

Further developments of the invention can be gathered from the following description.

### Brief description of the figures

In the following the invention will be explained further making reference to the attached drawings.
Fig. 1 schematically shows a communication network in which the invention can be implemented.
Fig. 2 schematically shows the structure of a device and a base station in which the invention can be implemented.
Fig. 3 schematically shows a time-frequency resource scheme for uplink transmission of small payload data and broadband data.
Fig. 4 schematically shows a time-frequency resource scheme for uplink transmission of small payload data and broadband data with coordinated allocation of time-frequency resources according to embodiments of the invention.
Fig. 5 schematically shows a message sequence chart for coordinated allocation of time-frequency resources to a broadband device and a small payload device according to embodiments of the invention.

### Description of the embodiments

The invention is described in the following within the framework of 3GPP LTE. However the invention is not restricted to 3GPP LTE or enhancements thereof, like LTE-Advanced (LTE-A), but can in principle be applied in other networks that applies allocation of uplink resources to devices, like e.g. a High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc. The invention may also be applied in future networks, like e.g. in 5G networks. In the following, instead of the term eNodeB used in LTE, the more general term base station is used.

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms, including technical and scientific terms, used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the sequel we assume an air interface using multi-carrier modulation scheme such as OFDM, or possibly some filtered OFDM solutions such as UF-OFDM or FBMC. However, the proposal can in principle also be applied to other modulation techniques, e.g. single carrier techniques, as e.g. SC-FDMA, with prefix/postfix blocks.

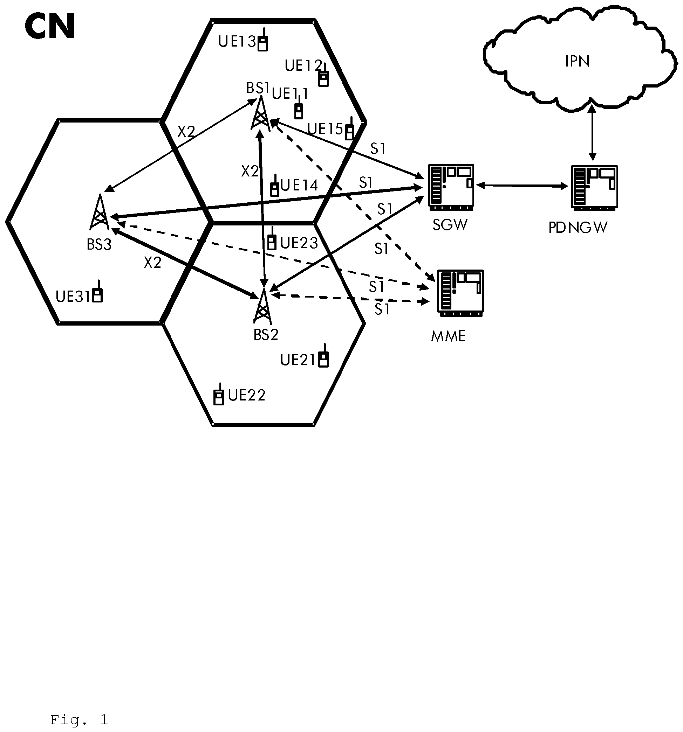

Fig. 1 shows as an example of a communication network in which the invention can be implemented a communication network CN according to the standard 3GPP LTE.

Said communication network CN comprises base stations BS1-BS3, devices UE11-UE31, a serving gateway SGW, a packet data network gateway PDNGW, and a mobility management entity MME.

The devices UE11-UE15 are connected via radio connections to the base station BS1, the devices UE21-UE23 are connected via radio connections to the base station BS2, and the device UE31 is connected via a radio connection to the base station BS3. In future evolutions of LTE, each of the devices UE11-UE31 can also be connected via radio connections to multiple of said base stations BS1-BS3. The device UE11 is a high rate, i.e. broadband device, as e.g. a smartphone or a tablet, whereas the further devices UE12-UE31 are small payload devices, as e.g. sensors.

The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between one of the base stations BS1-BS3, i.e. an eNodeB in this example, and the Evolved Packet Core (EPC). The S1 interface has two flavours, S1-MME for exchange of signaling messages between one of the base stations BS1-BS3 and the mobility management entity MME and S1-U for the transport of user datagrams between one of the base stations BS1-BS3 and the serving gateway SGW.

The X2 interface is added in 3GPP LTE standard primarily in order to transfer the user plane signal and the control plane signal during handover.

The serving gateway SGW performs routing of the IP user data between the base stations BS1-BS3, and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a device and the respective serving base station BS1-BS3.

The mobility management entity MME performs tasks of the subscriber management and the session management, and also performs the mobility management during handover between different access networks.

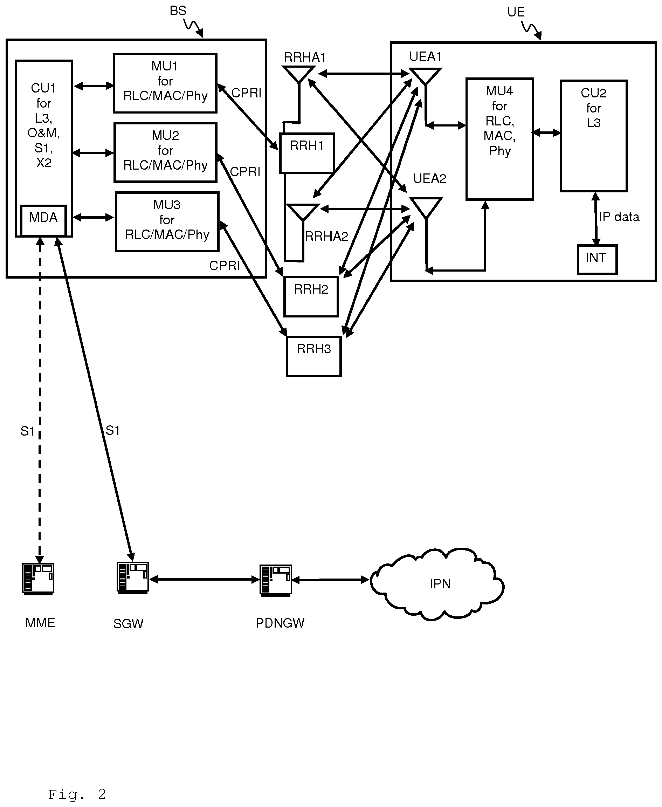

Fig. 2 schematically shows the structure of a broadband device UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a so-called Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 2 for the sake of simplicity. As an alternative, the remote radio heads RRH1, RRH2, and RRH3 can be included in the base station BS.

The media dependent adapter MDA is connected to the mobility management entity MME and to the serving gateway SGW and thus to the packet data network gateway PDNGW, which is in turn connected to the external IP network IPN.

The device UE comprises by way of example two device antennas UEA1 and UEA2, a modem unit board MU4, a control unit board CU2, and interfaces INT.

The two device antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity to different media like e.g. fiber or electrical connection.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The device antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analog way in the reverse direction from the device UE to the external IP network IPN.

The base station BS can be operable to communicate with one or more active devices UE and a base station can be located in or adjacent to a coverage area of another base station, e.g. a macro cell base station or small cell base station. Hence, embodiments may provide a mobile communication system comprising one or more devices and one or more base stations, wherein the base stations may establish macro cells or small cells, as e.g. pico-, metro-, or femto cells. A device may correspond to a smartphone, a cell phone, user equipment, a laptop, a notebook, a personal computer, a Personal Digital Assistant (PDA), a Universal Serial Bus (USB) -stick, a car, a sensor for sensor networks, which might transmit and receive data with or without the interaction of a human being and other fixed installed or mobile communication devices able to transmit and receive data, etc. A device may also be referred to as User Equipment or mobile in line with the 3GPP terminology.

A base station can be located in the fixed or stationary part of the network or system. A base station may correspond to a transmission point, an access point, a macro cell, a small cell, a micro cell, a femto cell, a metro cell etc. A base station may comprise the functionality of a remote radio head as depicted in fig. 2 and described above. A base station can be a wireless interface of a wired network, which enables transmission of radio signals to a device. Such a radio signal may comply with radio signals as, for example, standardized by 3GPP or, generally, in line with one or more of the above listed systems. Thus, a base station may correspond to a NodeB, an eNodeB, a Base Transceiver Station (BTS), an access point, a remote radio head, a transmission point etc., which may be further subdivided in a remote unit and a central unit.

A device can be associated, camped on, or registered with a base station or cell. The term cell refers to a coverage area of radio services provided by a base station, e.g. a NodeB (NB), an eNodeB (eNB), a remote radio head, a transmission point, etc. A base station may operate one or more cells on one or more frequency layers, in some embodiments a cell may correspond to a sector. For example, sectors can be achieved using sector antennas, which provide a characteristic for covering an angular section around a remote unit or base station. In some embodiments, a base station may, for example, operate three or six cells covering sectors of 120° (in case of three cells), 60° (in case of six cells) respectively. A base station may operate multiple sectorized antennas. In the following a cell may represent an according base station generating the cell or, likewise, a base station may represent a cell the base station generates.

In other words, in embodiments the mobile communication system may correspond to a HetNet, which utilizes different cell types, i.e. Closed Subscriber Group (CSG) cells and open cells, and cells of different sizes, as, for example, macro cells and small cells, where the coverage area of a small cell is smaller than the coverage area of a macro cell. A small cell may correspond to a metro cell, a micro cell, a pico cell, a femto cell, etc. Such cells are established by base station for which their coverage areas are determined by their transmission power and interference condition. In some embodiments a small cell's coverage area can at least partly be surrounded by the coverage area of a macro cell established by another base station. The small cells can be deployed to extend the capacity of the network. A metro cell may therefore be used to cover a smaller area than a macro cell, e.g. a metro cell may cover a street or a section in a metropolitan area. For a macro cell the coverage area may have a diameter in the order of one or more kilometers, for a micro cell the coverage area may have a diameter below a kilometer, and for a pico cell the coverage area may have a diameter below 100 m. A femto cell may be the smallest cell and it may be used to cover a household or gate section at the airport, i.e. its coverage area may have a diameter below 50m. Thus, a base station may also be referred to as cell.

As already mentioned above, a basic idea is to apply an appropriate uplink resource allocation mechanism dependent on a service, as e.g. massive machine communication or broadband traffic, the uplink resources are used for, or dependent on a category of a device the uplink resources are used for, as e.g. a sensor for machine communication or a smartphone for broadband traffic. Furthermore, a resource allocation mechanism assigns uplink resources by using a mapping relation of the uplink resources to uplink scheduling request resources or uplink scheduling request indices in order to save radio resources.

According to embodiments of the invention, it is proposed to use a scheduling request (SR) channel for devices sending small payloads. In an embodiment of the invention the SR channel allows to convey one or multiple SRs per subframe on a set of radio resources, e.g. time and frequency resources, and a single SR is defined by usage of a specific SR resource, e.g. one out of a number N of code sequences, e.g. Zadoff-Chu sequences. An SR received within a subframe may therefore be represented by an SR index, e.g. be numbered 0, 1, ... N-1.

In an embodiment of the invention, a scheduling request (SR) sent from a small payload device to a base station on such a scheduling request channel is acknowledged in DL from the base station via a DL identifier sent out in the cell on a SR acknowledgment channel, the DL identifier being implicitly tagged to the SR used.

The DL identifier points to predefined UL resources to be used by the small payload device for transmission of small payloads, e.g. it points to a certain UL resource block.

Thus, the small payload device sends a scheduling request (SR), receives an acknowledgement (ACK) on the DL SR acknowledgment channel, and transmits payload on predefined UL resources, together with its device identifier (ID).

In a preferred embodiment, when the device transmits the payload on the predefined UL resources, it includes a device identifier, such as a 16 bit C-RNTI. Further the device may transmit on the predefined UL resource also a transport format indicator to enable the device to adapt the modulation coding scheme, e.g. based on the measured average DL channel quality.

If UL data transmitted by the small payload device is correctly received by the base station, it is acknowledged by the base station in DL, e.g. by means of one of the following:
- via implicit tagging: For this purpose, likewise an acknowledgement can be transmitted on implicitly defined radio resources, e.g. using a similar transmission format as the SR acknowledgment channel.
- device-specific signaling, i.e. an identifier related to a device: A special acknowledgement (ACK) message, e.g. on a Physical Downlink Control Channel (PDCCH) in a downlink control information (DCI) in LTE, can be introduced.

If the UL data transmitted by the small payload device is not correctly received by the base station, the small payload device will re-attempt the SR channel with a random time offset.

Other devices such as mobile broadband devices, e.g. smartphones sending broadband traffic, that receive an UL scheduling grant in the respective subframe overhear the SR acknowledgment channel in DL. If the broadband devices detect a conflict between their own UL scheduling grant and scheduled small payload transmission of the small payload device, they interpret this as a correction of their UL scheduling grant, in that they do not transmit data on those small payload resources. This may reduce the size of an UL scheduling grant or enable better UL resource utilization in the presence of small payload packets scattered over the available UL bandwidth.
In one embodiment, we assume that typically after a random access procedure the small payload device is known by the network, has exchanged a short device ID, as e.g. a 16bit Cell Radio Network Temporary Identifier (C-RNTI), and the UL is time-synchronized, e.g. within accuracy of a cyclic prefix. However, also embodiments using asynchronous uplink transmissions can be applied.

In a preferred embodiment, the SR channel is contention based, in the following referred to as contention-based scheduling request (CBSR) channel. However, also embodiments applying contention-free SR are possible and useful.

The number of SRs that can be conveyed on a CBSR channel shall preferably be greater or equal to the number of predefined UL resources per respective subframe or subframes. If more SR opportunities are provided than predefined UL data resources, then this reduces the collision probability on the UL data channel. If e.g. a CBSR channel uses a same structure as a LTE PUCCH SR (PUCCH = Physical Uplink Control Channel), the CBSR channel may carry up to N = 18 SRs per physical resource block, with SR indices numbered e.g. n=0...N-1, suitable to support e.g. M = 6 UL resources, numbered m=0...M-1. The SR index n may then map to UL resource m = n modulo M, e.g. n = 2, 8, and 14 all map to m = 2.

In DL, there may be defined N = 18 radio resources to carry the N = 18 SR acknowledgments, where each of the N = 18 SR acknowledgment resources is mapped in a biunique way to the N = 18 SR resources or indices, e.g. by a predefined mapping or by means of system information signaling in downlink. In DL, there may be further defined M = 6 radio resources to carry the M = 6 data acknowledgments, where each of the M = 6 data acknowledgment resources is mapped in a biunique way to the M = 6 UL resources, e.g. by a predefined mapping or by means of system information signaling in downlink. A device will send SR index n, will receive an ACK indicating that SR index n was correctly received by the base station, the device will then transmit its data payload on UL resource m = n modulo M, and will then receive an ACK indicating that its data payload on UL resource m was correctly received by the base station.

Different CBSR channels or SR indexes may map to different UL data payload resources. Respective system information to indicate the mapping may be sent out on downlink, so that the small payload devices know which UL data payload resources they have to use.

A small payload device may use SRs on a CBSR channel together with periodic contention-free SRs on a PUCCH. If the configured period of a SR window on PUCCH is below a threshold, the small payload device may not access the CBSR channel, where in turn the threshold may depend on the CBSR configuration. As an example, the small payload device may use the CBSR channel only if the period of the SR window on the CBSR channel is shorter than the small payload device specific period on PUCCH.

The SRs are typically numbered, e.g. with an index from 0 to N-1, and the SR index used by a certain small payload device may be tagged to the small payload device ID. E.g. if a SR window on a CBSR channel is capable of carrying 64 SRs, then e.g the 6 least significant bits of the 16bit small payload device ID may be used by the small payload device to select the SR index. In this way the network can balance the usage of the SRs, so that the different SR indices are applied with approximately equal probability. If there are only a few small payload devices in the cell, there may be a biunique mapping of the small payload device ID to the SR index. In this case the network may inform the small payload device that it shall not include the small payload device ID into the UL data payload.

In the embodiment described above, it was assumed that predefined UL resources are used which are implicitly tagged to the used SR index or SR acknowledgement.

In a more flexible embodiment with scheduled UL resources, a SR on a e.g. CBSR channel is answered in downlink by a scheduling grant explicitly pointing to one of the defined UL resources, where the radio resources used to convey a scheduling grant are implicitly tagged to the SR resource or SR index used to convey the SR.

In an alternative embodiment, the mapping relation of the uplink resources to uplink scheduling request resources or uplink scheduling request indices is defined by other means, e.g. by conveying the UL scheduling grant via DCI on LTE PDCCH and encoding it with a SR index-specific CRC check, similar as it is done in LTE with the LTE RACH response using a Random Access Radio Network Temporary Identifier (RA-RNTI).

In this case, the broadband devices receiving a grant to send UL broadband data may overhear all the potential scheduling grants that may be sent out by the network in response to the SR window e.g. on the CBSR channel. If the broadband devices detect a conflict between their own UL scheduling grants and scheduled small payload transmission of the small payload devices, the broadband devices interpret this as a correction of their UL scheduling grant, in that they do not transmit data on those small payload resources.

In embodiments of the invention, several techniques may be used to reduce the involved computational complexity for the blind searches:
- Scheduling grants in response to a SR e.g. on a CBSR channel may be conveyed on preallocated radio resources, so that the search space is reduced.
- A broadband device may first scan a DL control channel whether it receives an UL scheduling grant, and only in case it has received an UL scheduling grant, the broadband device also scans for the possibly conflicting UL small payloads.
- The UL payloads of small payload devices tagged to a CBSR may be constrained within a certain reserved resource space, e.g. a certain subband, and information concerning this resource space is sent out in the cell via system information broadcast in DL. Only if a broadband device detects a conflict between its UL scheduling grant and this reserved resource space, the broadband device also scans for the possibly conflicting UL payloads of small payload devices. The network has flexibility to schedule the UL payloads of small payload devices, but is restricted within a, preferably semi-statically, defined resource space.

An advantage of using such a scheduling grant as compared to a simple achnowledgement of the SR is that it enables to correct the UL timing for the data transmission, as indicated in table 1 and explained in the following.

**Table 1:**

| **synchronicity/asynchronicity** | | **Data flow** | | | |
|---|---|---|---|---|---|
| **SR** | **UL data** | **1. UL** | **2. DL** | **3. UL** | **4. DL** |
| sync | sync | SR | ACK | UL data | ACK |
| sync | sync | SR | UL grant + TA | UL data | ACK |
| async | sync | SR | UL grant + TA | UL data | ACK |
| async | async | SR | ACK | UL data | ACK |

In the first and second column in table 1, it is indicated whether the scheduling request SR sent from a small payload device to a base station and the UL data sent from the small payload device to the base station respectively is sent synchronously, i.e. assuming closed-loop time synchronization, which is abbreviated with sync, or asynchronously, i.e. assuming no closed-loop time synchronization, which is abbreviated with async. Further combinations are easy to derive for a person skilled in the art.

In the third column, it is simply indicated that a scheduling request SR is sent from the small payload device to the base station.

In the fourth column, it is indicated whether a reply to the scheduling request SR is performed in DL by an acknowledgement ACK or by an UL grant with UL time alignment TA.

In the fifth column, it is simply indicated that UL data is sent from the small payload device to the base station.

In the sixth column, it is simply indicated that on successful reception of the UL data an acknowledgement ACK is sent in DL from the base station to the small payload device.

In rows three to six, for several combinations for sending synchronous or asynchronous scheduling requests SR and synchronous or asynchronous UL data, the corresponding data flow in UL and DL is indicated.

In the embodiment in the third row, both the scheduling request SR and UL data are sent synchronously. As already the scheduling request SR is sent synchronously, from the small payload device, e.g. due to an earlier synchronization based on an earlier transmission or an earlier RACH process with timing alignment, or due to an LTE mechanism after initial access, i.e. UL sounding or CQI or data used to measure timing alignment, which is in turn sent within an UL grant in downlink control information (DCI), there is no need for an UL time alignment sent from the base station in DL. Thus, a reply to the scheduling request SR can be performed in DL simply by an acknowledgement ACK, and nonetheless the UL data can be sent synchronously.

In the embodiment in the fourth row, both the scheduling request SR and UL data are sent synchronously. Although already the scheduling request SR is sent synchronously from the small payload device, resource allocation can be performed by the base station by sending an UL grant with UL time alignment TA in DL.

In the embodiment in the fifth row, the scheduling request SR is sent asynchronously, and UL data are sent synchronously. Thus, as the scheduling request SR is sent asynchronously from the small payload device, resource allocation must be performed by the base station by sending an UL grant with UL time alignment TA in DL in order to send the UL data synchronously.

In the embodiment in the sixth row, both the scheduling request SR and UL data are sent asynchronously. As the UL data are sent asynchronously, there is no need for an UL time alignment sent from the base station in DL. Thus, a reply to the scheduling request SR can be performed in DL simply by an acknowledgement ACK.

So, as can be seen from the embodiments depicted in table 1, access to the CBSR channel may be asynchronous w/o prior UL time alignment TA or with less stringent UL time alignment. A disadvantage would be that more resources would be needed for the CBSR channel with asynchronous access as compared to synchronous access.

As already mentioned above, the UL broadband data allocation of a broadband device needs to avoid collisions with the small payload allocation of a small payload device. This can be achieved by muting the broadband data allocation e.g. as follows:
- OFDMA: The colliding resources are simply not allocated by the broadband device, which results in e.g. two resource assignments separated by the small payload data allocation of the small payload device.
- SC-FDMA: The broadband data allocation is increased by the small payload data allocation which in a first step reduces the code rate. In a second step, after Discrete Fourier Transformation (DFT) spread, puncturing on the small payload allocation is applied.
- UF-OFDM: Combination with UF-OFDM is beneficial when applying asynchronous scheduling request SR and/or UL data, as e.g. depicted in table 1 and described above.

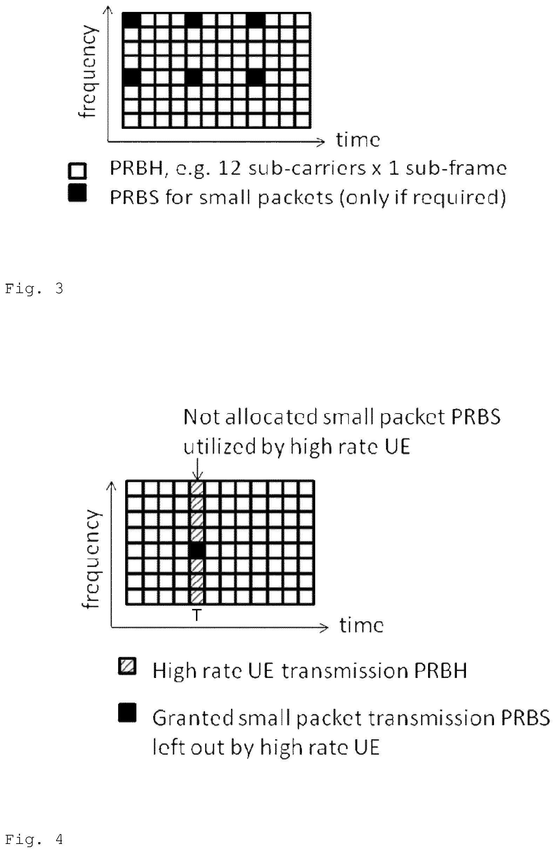

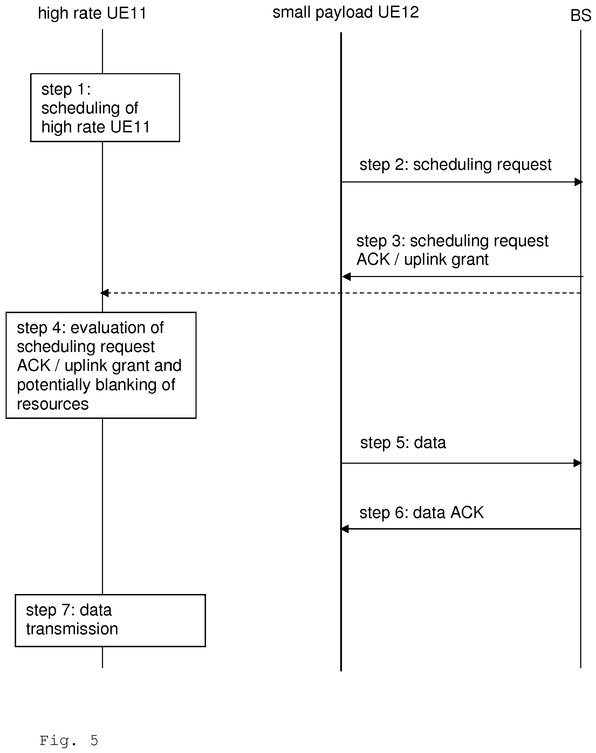

In the sequel, first in fig. 3 and the respective description, a time-frequency resource scheme for uplink transmission of small payload data and broadband data is shown, and then in fig. 4, a time-frequency resource scheme for uplink transmission of small payload data and broadband data with coordinated allocation of time-frequency resources according to embodiments of the invention is shown. Finally, in fig. 5 a message sequence chart for coordinated allocation of time-frequency resources to a broadband device and a small payload device according to embodiments of the invention is shown.

Fig. 3 schematically shows a time-frequency resource scheme for uplink transmission of small payload data and broadband data.

Fig. 3 shows 96 physical resource blocks indicated as squares in a time-frequency grid. Each of the physical resource blocks e.g. extends over 12 subcarriers in frequency domain, and over 1 subframe of e.g. 14 OFDM symbols in time domain. The physical resource blocks PRBH which can be allocated only to broadband devices are depicted as white squares, whereas the physical resource blocks PRBS which are predefined for allocation to small payload devices are depicted as black squares. However, the physical resource blocks PRBS are only allocated to a small payload device if the small payload device has sent a scheduling request for allocation of resources as described above. In addition, the physical resource blocks PRBS can be used by broadband devices in case they are not allocated to a small payload device.

Fig. 4 schematically shows a time-frequency resource scheme for uplink transmission of small payload data and broadband data with coordinated allocation of time-frequency resources according to embodiments of the invention.

Fig. 4 shows similar to fig. 3 96 physical resource blocks indicated as squares in a time-frequency grid. Also as in fig. 3, each of the physical resource block e.g. extends over 12 subcarriers in frequency domain, and over 1 subframe of e.g. 14 OFDM symbols in time domain. The physical resource blocks at time T extending over the whole frequency range are allocated to a broadband device by a scheduling grant. However, the physical resource block PRBS depicted as black square is allocated to a small payload device which has sent a scheduling request for allocation of resources. The uppermost physical resource block at time T has been predefined for allocation to small payload devices, but as there is no request for this bandwidth, it is currently not allocated to a small payload device and can be used by the broadband device. Thus, as described above, the broadband device reduces its amount of allocated resource blocks by the physical resource block PRBS depicted as black square which is allocated to the small payload device. As a result, the broadband device uses the physical resource blocks which are depicted as striped squares in fig. 4.Fig. 5 schematically shows a message sequence chart for coordinated allocation of time-frequency resources to a broadband device, as e.g. the broadband device UE11 as depicted in fig. 1 and described above, and a small payload device, as e.g. the small payload device UE12 as depicted in fig. 1 and described above, according to embodiments of the invention.

In step 1, scheduling of UL resources to the broadband device UE11 is performed e.g. by sending Downlink Control Information (DCI) comprising UL scheduling grants from the serving base station BS to the broadband device UE11. The details are not depicted in fig. 5 for the sake of simplicity.

In step 2, the small payload device UE12 sends a scheduling request SR, e.g. using a SR channel as described above, to the base station BS.

In step 3, the base station BS sends information related to allocation of uplink resources, e.g. either a scheduling request acknowledgement or an uplink grant to the small payload device UE12 e.g. on a DL SR acknowledgement channel, and the small payload device UE12 is in this way informed about allocated UL resources . The broadband device UE11 overhears the scheduling request acknowledgement or the uplink grant, which is indicated by a dotted arrow in fig. 5.

In step 4, the broadband device UE11 evaluates the scheduling request acknowledgement or the uplink grant to find out the UL resources which have been allocated to the small payload device UE12. If the broadband device UE11 detects, that some or all of the UL resources which have been allocated to the small payload device UE12 have also been allocated to the broadband device UE11, the broadband device UE11 reduces its allocated UL resources by the UL resources which have also been allocated to the small payload device UE12, i.e. the broadband device UE11 does not transmit on said resources, as e.g. depicted in fig. 4 and described above.

In step 5, the small payload device UE12 transmits data on its allocated UL resources, as e.g. depicted in fig. 4, to the base station BS.

In step 6, the base station BS sends an acknowledgement to the small payload device UE12 in case of error-free reception of the transmitted UL data.

In step 7, the broadband device UE11 transmits data on its allocated UL resources reduced by the UL resources which have also been allocated to the small payload device UE12, as e.g. depicted in fig. 4, to the base station BS. The broadband device UE11 can however start UL transmission immediately after step 4, i.e. in parallel to the UL transmission of the small payload device UE12.

In the embodiments described above and depicted e.g. in figs. 3, 4 and 5, the corresponding processing steps can be performed e.g. in the modem unit boards MU1-MU4 and the control unit board CU1, CU2 of the base station BS and the device UE respectively as depicted in fig. 2 and described above.

## Claims

1. A method for allocation of uplink resources (PRBS, PRBH), using at least two resource allocation mechanisms, wherein
• a resource allocation mechanism of said at least two resource allocation mechanisms is used dependent on at least one of a service and a category of a device (UE11, UE12) the uplink resources are used for,
and at least another of said at least two resource allocation mechanisms assigns uplink resources (PRBS, PRBH) by using a mapping relation of the uplink resources to uplink scheduling request resources or uplink scheduling request indices,
wherein
• a first device (UE12) sends a scheduling request to a base station (BS),
• the base station (BS) sends information for allocation of uplink resources (PRBS) to the first device (UE12), and **characterized in that**
• at least one further device (UE11) overhears the information for allocation of uplink resources (PRBS) to the first device (UE12),
• the at least one further device (UE11) detects whether uplink resources (PRBS) allocated by said information are also allocated to the further device (UE11),
• and the at least one further device (UE11) reduces its uplink resources (PRBH) by uplink resources which are allocated both by said information and to the at least one further device (UE11).

2. A method for allocation of uplink resources (PRBS, PRBH) according to claim 1 wherein scheduling requests are defined by usage of a specific scheduling request resource.

3. A method according to claim 2, wherein the scheduling request is one out of a number of code sequences, such that each scheduling request is representable by an index, and wherein the downlink identifier is implicitly tagged to the scheduling request index.

4. A method according to claim 2 or claim 3, wherein said at least two different resource allocation mechanisms further use different scheduling request channels.

5. A method according to any of the preceding claims, wherein the device (UE11, UE12) uses at least two different resource allocation mechanisms for at least two services of the device the uplink resources are used for.

6. A method according to claim 1, wherein the at least one further device (UE11) first scans a downlink control channel whether uplink resources (PRBH) are allocated to the at least one further device (UE11), and then detects whether uplink resources (PRBS) are allocated to another device (UE12) only when uplink resources (PRBH) are allocated to the at least one further device (UE11).

7. A method according to claim 1 or claim 6, wherein the uplink resources (PRBS) allocated to the first device (UE12) are constrained within a defined resource space, and the at least one further device (UE11) detects whether uplink resources (PRBS) are allocated to the first device (UE12) only when uplink resources (PRBH) allocated to the at least one further device (UE11) at least partially lie within said defined resource space.

## Patentansprüche

1. Verfahren zum Zuweisen von Uplink-Ressourcen (PRBS, PRBH), unter Verwenden von mindestens zwei Ressourcenzuweisungsmechanismen, wobei
• ein Ressourcenzuweisungsmechanismus besagter mindestens zwei Ressourcenzuweisungsmechanismen verwendet wird in Abhängigkeit mindestens eines aus Dienst oder Kategorie einer Vorrichtung (UE11, UE12), für die die Uplink-Ressourcen verwendet werden,
und mindestens ein weiterer besagter mindestens zwei Ressourcenzuweisungsmechanismen Uplink-Ressourcen (PRBS, PRBH) zuweist unter Verwenden einer Abbildungsbeziehung der Uplink-Ressourcen auf die Uplink-Scheduling-Anforderungsressourcen oder Uplink-Scheduling-Anforderungsindizes, wobei
• eine erste Vorrichtung (UE12) eine Scheduling-Anforderung an eine Basisstation (BS) sendet,
• die Basisstation (BS) Information sendet zum Zuweisen von Uplink-Ressourcen (PRBS) zu der ersten Vorrichtung (UE12) und **dadurch gekennzeichnet,**
**dass**
• mindestens eine weitere Vorrichtung (UE11) die Information mithört zum Zuweisen von Uplink-Ressourcen (PRBS) zu der ersten Vorrichtung (UE12),
• die mindestens eine weitere Vorrichtung (UE11) erkennt, ob die Uplink-Ressourcen (PRBS), die durch besagte Information zugewiesen werden, auch der weiteren Vorrichtung (UE11) zugewiesen werden,
• und die mindestens eine weitere Vorrichtung (UE11) ihre Uplink-Ressourcen (PRBH) um Uplink-Ressourcen reduziert, welche sowohl durch besagte Information als auch der mindestens einen weiteren Vorrichtung (UE11) zugewiesen wird.

2. Verfahren zum Zuweisen von Uplink-Ressourcen (PRBS, PRBH) nach Anspruch 1, wobei Scheduling-Anforderungen definiert werden durch das Verwenden einer spezifischen Scheduling-Anforderungsressource.

3. Verfahren nach Anspruch 2, wobei die Scheduling-Anforderung eine aus einer Anzahl von Codesequenzen ist, sodass jede Scheduling-Anforderung repräsentiert werden kann durch einen Index und wobei die Downlink-Kennung implizit markiert ist mit dem Scheduling-Anforderungsindex.

4. Verfahren nach Anspruch 2 oder 3, wobei besagte mindestens zwei verschiedene Ressourcenzuweisungsmechanismen weiterhin verschiedene Scheduling-Anforderungskanäle benutzen.

5. Verfahren nach einem beliebigen der vorhergehenden Ansprüche, wobei die Vorrichtung (UE11, UE12) mindestens zwei verschiedene Ressourcenzuweisungsmechanismen für mindestens zwei Dienste der Vorrichtung verwendet, für welche die Uplink-Ressourcen verwendet werden.

6. Verfahren nach Anspruch 1, wobei mindestens die eine weitere Vorrichtung (UE11) zuerst einen Downlink-Kontrollkanal scannt, ob Uplink-Ressourcen (PRBH) zugewiesen sind zu der mindestens einen weiteren Vorrichtung (UE11), und dann erkennt, ob Uplink-Ressourcen (PRBS) einer anderen Vorrichtung (UE12) zugewiesen sind, nur dann, wenn Uplink-Ressourcen (PRBH) der mindestens einen weiteren Vorrichtung (UE11) zugewiesen sind.

7. Verfahren nach Anspruch 1 oder Anspruch 6, wobei die Uplink-Ressourcen (PRBS), die der ersten Vorrichtung (UE12) zugewiesen sind, begrenzt sind innerhalb eines definierten Ressourcenraums, und wobei die mindestens eine weitere Vorrichtung (UE11) erkennt, ob Uplink-Ressourcen (PRBS) der ersten Vorrichtung (UE12) zugewiesen sind, nur dann, wenn Uplink-Ressourcen (PRBH) der mindestens einen weiteren Vorrichtung (UE11) zugewiesen sind, die mindestens teilweise innerhalb besagten definierten Ressourcenraums liegen.

## Revendications

1. Procédé d'affectation de ressources de liaison montante (PRBS, PRBH), en utilisant au moins deux mécanismes d'affectation de ressources, dans lequel
• un mécanisme d'affectation de ressources parmi lesdits au moins deux mécanismes d'affectation de ressources est utilisé en fonction d'un service et/ou d'une catégorie d'un dispositif (UE11, UE12) pour lequel les ressources de liaison montante sont utilisées,
et au moins un autre parmi lesdits au moins deux mécanismes d'affectation de ressources attribue des ressources de liaison montante (PRBS, PRBH) en utilisant une relation de mise en correspondance entre les ressources de liaison montante et des ressources de demande de programmation de liaison montante ou des indices de demande de programmation de liaison montante, dans lequel
• un premier dispositif (UE12) envoie une demande de programmation à une station de base (BS),
• la station de base (BS) envoie des informations d'affectation de ressources de liaison montante (PRBS) au premier dispositif (UE12), et **caractérisé en ce que**
• au moins un autre dispositif (UE11) intercepte les informations d'affectation de ressources de liaison montante (PRBS) destinées au premier dispositif (UE12),
• l'au moins un autre dispositif (UE11) détecte si des ressources de liaison montante (PRBS) affectées par lesdites informations sont également affectées à l'autre dispositif (UE11),
• et l'au moins un autre dispositif (UE11) réduit ses ressources de liaison montante (PRBH) par des ressources de liaison montante qui sont affectées par lesdites informations à l'au moins un autre dispositif (UE11).

2. Procédé d'affectation de ressources de liaison montante (PRBS, PRBH) selon la revendication 1 dans lequel des demandes de programmation sont définies par l'utilisation d'une ressource de demande de programmation spécifique.

3. Procédé selon la revendication 2, dans lequel la demande de programmation est une séquence de code parmi un certain nombre de séquences de code, de sorte que chaque demande de programmation puisse être représentée par un indice, et dans lequel l'identifiant de liaison descendante est implicitement marqué avec l'indice de demande de programmation.

4. Procédé selon la revendication 2 ou la revendication 3, dans lequel lesdits au moins deux mécanismes d'affectation de ressources différents utilisent en outre des canaux de demande de programmation différents.

5. Procédé selon l'une quelconque des revendications précédentes, dans lequel le dispositif (UE11, UE12) utilise au moins deux mécanismes d'affectation de ressources différents pour au moins deux services du dispositif pour lesquels les ressources de liaison montante sont utilisées.

6. Procédé selon la revendication 1, dans lequel l'au moins un autre dispositif (UE11) balaye en premier un canal de commande de liaison descendante si des ressources de liaison montante (PRBH) sont affectées ou non à l'au moins un autre dispositif (UE11), puis détecte si des ressources de liaison montante (PRBS) sont affectées ou non à un autre dispositif (UE12) uniquement lorsque des ressources de liaison montante (PRBH) sont affectées à l'au moins un autre dispositif (UE11).

7. Procédé selon la revendication 1 ou la revendication 6, dans lequel les ressources de liaison montante (PRBS) affectées au premier dispositif (UE12) sont contraintes dans un espace de ressources défini, et l'au moins un autre dispositif (UE11) détecte si des ressources de liaison montante (PRBS) sont affectées ou non au premier dispositif (UE12) uniquement lorsque des ressources de liaison montante (PRBH) affectées à l'au moins un autre dispositif (UE11) se trouvent au moins partiellement dans ledit espace de ressources défini.
